# FASCICULE DE BREVET EUROPEEN

(11) **EP 3 385 150 B1**
(45) Date de publication et mention de la délivrance du brevet: **26.02.2020**
(21) Numéro de dépôt: 18160875.3
(22) Date de dépôt: 09.03.2018
(51) Int. Cl.: B62D 21/15, B62D 25/20

(54) **RENFORCEMENT DE PLANCHER DE VÉHICULE EN CAS DE CHOC FRONTAL À FAIBLE RECOUVREMENT**
FAHRZEUGBODENVERSTÄRKUNG IM FALLE EINES FRONTALEN AUFPRALLS MIT GERINGER ÜBERDECKUNG
VEHICLE FLOOR REINFORCEMENT IN CASE OF FRONTAL COLLISION WITH SMALL OVERLAP

(30) Priorité: 06.04.2017 FR 1752983
(43) Date de publication de la demande: 10.10.2018
(73) Titulaire: PSA Automobiles SA, 78300 Poissy (FR)
(72) Inventeur: PERU, Marc, 92290 CHATENAY MALABRY (FR)

(56) Documents cités:
- DE-A1-102012 007 889
- DE-A1-102015 215 507
- US-A1- 2012 256 448

## Description

L'invention a trait au domaine des véhicules automobiles, plus particulièrement à leurs structures en vue de l'absorption de l'énergie d'impact en cas de choc.

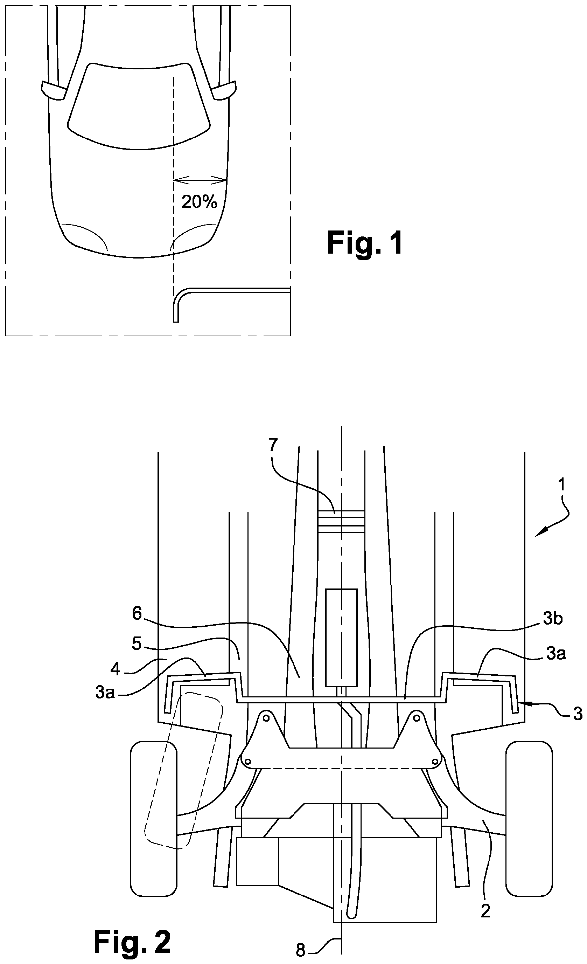

Afin d'obtenir une homologation, les constructeurs automobiles doivent soumettre les véhicules à des tests. Les véhicules automobiles doivent en effet respecter certaines exigences techniques fixées par les réglementations relatives à la sécurité du passager. Parmi ces tests, on compte un nouveau test de choc frontal contre un obstacle avec un faible recouvrement correspondant à 20% de la largeur de voie du véhicule, tel qu'illustré à la figure 1.

Suite à la collision d'un véhicule automobile avec un obstacle rigide de faible largeur par rapport à la largeur du véhicule, la roue entame un mouvement vers l'arrière sous l'effet de la décélération du véhicule. L'intrusion de la roue du côté subissant le choc entraîne la déformation de l'habitacle du véhicule et du compartiment du passager, sous l'effet de l'énergie d'impact qui leur est transmise.

Le document de brevet DE 10 2012 007 889 A1 divulgue un dispositif installé entre la traverse de pare-chocs et une roue avant. Ce dispositif est couplé à un bras de suspension de la roue, grâce à un renvoi de type poulie. Le dispositif comprend en outre un élément d'actionnement agissant sur le renvoi. Lors d'un impact, le renvoi est actionné et exerce un effort de traction vers l'avant sur un des bras de suspension, entraînant la roue dans un mouvement de rotation autour d'un axe vertical.

Ce dispositif est intéressant mais présente certaines limitations, notamment en ce qu'il constitue un système mécanique potentiellement complexe et sujet à défaillance. Il nécessite également une interaction avec un bras de suspension, ce qui n'est pas nécessairement désirable. De plus, la mise en place de l'élément d'actionnement requiert un certain volume qui n'est pas nécessairement disponible.

Le document de brevet DE 10 2011 102 758 A1 divulgue la présence, au niveau de la face avant du véhicule, de deux structures latérales disposées devant les passages de roues avant et fixées directement à une traverse de pare-chocs. Ces structures sont aptes à reprendre des efforts d'impact à faible recouvrement. Cependant leur efficacité est limitée en raison de la flexion à laquelle elles vont être soumises.

En outre, le document US 2012/256448 A1 décrit un véhicule automobile selon le préambule de la revendication 1.

L'invention a pour objectif de pallier au moins un des inconvénients susmentionné. Plus particulièrement, l'invention a pour objectif d'améliorer la sécurité lors d'un choc frontal à faible recouvrement par des moyens efficaces et économiques.

Selon un mode avantageux de l'invention, le véhicule automobile comprend une structure de plancher, et un essieu de deux roues avant, caractérisé en ce qu'il comprend, en outre, une poutre de renfort s'étendant transversalement sous la structure de plancher, à l'arrière de l'essieu, de manière à limiter un déplacement vers l'arrière d'une des roues avant en cas de choc frontal à recouvrement latéral partiel du côté de ladite roue.

Avantageusement, la poutre de renfort s'étend suivant une direction principale qui est perpendiculaire à l'axe longitudinal du véhicule.

Selon un mode avantageux de l'invention, la poutre de renfort s'étend sur plus de 80% de la largeur de la structure de plancher.

Selon un mode avantageux de l'invention, la poutre de renfort comprend deux extrémités opposées disposées derrière les deux roues avant, respectivement, et comprenant, chacune, un profil en relief apte à engager avec la roue correspondante lors du déplacement vers l'arrière de celle-ci. Le profil en relief est considéré dans un plan horizontal.

Selon un mode avantageux de l'invention, le profil en relief de chaque extrémité de la poutre de renfort est en forme de U avec une ouverture dirigée vers la roue correspondante.

Avantageusement, le profil en relief de la poutre de renfort est réalisé par cintrage, notamment à chaud, de ladite poutre.

Selon un mode avantageux de l'invention, la poutre de renfort du véhicule automobile est constituée d'un profilé métallique, préférentiellement de section fermée. La section peut être circulaire ou rectangulaire, correspondant à un tube. Le tube présente avantageusement une épaisseur de paroi supérieure à 2mm et/ou inférieure à 4mm. Le tube présente avantageusement un diamètre, dans le cas d'un tube circulaire, ou un côté, dans le cas d'un tube carré, supérieur à 40mm et/ou inférieur à 60mm. La section circulaire permet de réduire l'encombrement du profilé métalique par rapport à un même profilé de section rectangulaire. Dans le cas d'un profilé de section circulaire, pour assurer une bonne fixation du profilé métalique à la stucture du plancher, un méplat est avantageusement formé le long de la surface de contact entre le profilé métalique et la structure de plancher. Un tel méplat peut être aussi formé le long de la surface opposée du profilé métalique, facilitant la fixation de vis traversantes.

Selon un mode avantageux de l'invention, la structure de plancher du véhicule automobile comprend deux longerons de bas de caisse le long des deux bords latéraux du plancher, respectivement, et deux poutres longitudinales sous le plancher entre lesdits longerons, la poutre de renfort étant fixée directement à chacun des longerons de bas de caisse et poutres longitudinales. Les deux poutres longitudinales sont dans le prolongement de poutres longitudinales avant et arrière communément appelées brancards.

Selon un mode avantageux de l'invention, la structure de plancher comprend un tunnel central et deux profilés longitudinaux intérieurs de part et d'autre dudit tunnel, la poutre de renfort étant fixée directement à chacun desdits profilés. Les profilés longitudinaux intérieurs sont adjacents au tunnel central.

Avantageusement, la fixation est assurée par des vis traversant la poutre de renfort et engageant dans les longerons de bas de caisse et/ou les profilés longitudinaux intérieurs et les poutres longitudinales.

Selon un mode avantageux de l'invention, le véhicule automobile comprend, en outre, une structure tubulaire disposée sous la structure de plancher directement à l'arrière de la poutre de renfort et configurée pour rigidifier ladite poutre en flexion.

Selon un mode avantageux de l'invention, la structure tubulaire comprend au moins deux portions de tube s'étendant vers l'arrière et de manière inclinée depuis deux extrémités opposées de ladite poutre, disposées derrière les deux roues avant, respectivement, jusqu'à une portion de tube s'étendant généralement transversalement. La section de chacun des tubes peut être circulaire ou rectangulaire. Le/les tube(s) présentent avantageusement une épaisseur de paroi supérieure à 1mm et/ou inférieure à 4mm. Le/les tube(s) présentent avantageusement un diamètre, dans le cas de tube(s) circulaire(s), ou un côté, dans le cas de tube(s) carré(s), supérieur à 25mm et/ou inférieur à 45mm.

Selon un mode avantageux de l'invention, la structure tubulaire est adjacente et à l'avant d'un cadre supportant des batteries sous le plancher.

Les mesures de l'invention sont intéressantes en ce que le dispositif permet de répartir les efforts sur le plancher, y compris sur le côté opposé du choc, notamment grâce à la géométrie transversale de la poutre de renfort et à la structure tubulaire adjacente qui la rigidifie en flexion. Le profil en relief, notamment en U, des extrémités de cette poutre de renfort, renforcé par les portions de tube inclinées de la structure tubulaire, permet quant à lui de limiter l'intrusion et la rotation de la roue. L'invention, du fait de sa conception, limite également l'accroissement de la masse à un ordre de grandeur de 4kg. Par ailleurs, le dispositif peut être installé sur un véhicule reconduit, donc déjà existant, et est déclinable selon les modèles de commercialisation en ce qu'il se fixe sur des points caractéristiques standards du plancher. La performance en cas de choc frontal à faible recouvrement est ainsi améliorée.

D'autres caractéristiques et avantages de la présente invention seront mieux compris à l'aide de la description et des dessins parmi lesquels :
- La figure 1 est une vue de dessus d'un véhicule, face à un obstacle couvrant 20% de sa largeur;
- La figure 2 illustre un plancher de véhicule équipé d'une poutre de renfort transversale, conformément à l'invention ;
- La figure 3 illustre deux modes de fixation de la poutre de renfort, conformément à l'invention ;
- La figure 4 illustre un plancher de véhicule muni de la poutre de renfort transversale telle qu'à la figure 2, d'une structure tubulaire, ainsi que d'un cadre optionnel de protection de batterie.

La figure 1 a déjà été décrite précédemment.

La figure 2 illustre un premier mode de réalisation de l'invention, où le plancher d'un véhicule 1 avec un essieu de deux roues avant 2 est équipé du dispositif. Celui-ci consiste en une poutre de renfort 3 qui s'étend transversalement sous le plancher, entre les longerons de bas de caisse 4 le long des deux bords latéraux du plancher. Ainsi, la poutre s'étend sur plus de 80% de la largeur du plancher. Dans un mode préféré de réalisation de l'invention, la poutre est fixée sur ces longerons de bas de caisse 4 ainsi que sur deux poutres longitudinales 5 situées entre ces longerons de bas de caisse 4. La poutre est également fixée aux profilés longitudinaux 6 intérieurs s'étendant de part et d'autre du tunnel central 7 du plancher.

La poutre de renfort 3 du véhicule automobile peut être constituée d'un profilé métallique, ou bien de tubes d'acier. La section peut être circulaire ou rectangulaire, correspondant à un tube. Le tube présente avantageusement une épaisseur de paroi supérieure à 2mm et/ou inférieure à 4mm. Le tube présente avantageusement un diamètre, dans le cas d'un tube circulaire, ou un côté, dans le cas d'un tube carré, supérieur à 40mm et/ou inférieur à 60mm.

Chacune des extrémités 3a de la poutre est disposée derrière une roue avant, et comprend un profil en relief avantageusement en forme de U, avec une ouverture dirigée vers la roue correspondante. La portion latérale extérieure de chacune des extrémités 3a peut être située en-dessous du longeron de bas de caisse 4 correspondant et/ou est disposée selon la même direction longitudinale. Avantageusement, le profil en relief de la poutre de renfort est réalisé par cintrage, notamment à chaud, de ladite poutre.

La poutre de renfort est réalisée symétrique par rapport à l'axe longitudinal principal 8 du véhicule. Les extrémités 3a présentent avantageusement une largeur supérieure à 150mm et/ou inférieure à 350mm. Les extrémités 3a présentent avantageusement une profondeur supérieure à 75mm et/ou inférieure à 350mm. Avantageusement, la poutre de renfort 3 présente un moment quadratique ou module d'inertie d'au minimum 1,22 10⁵ mm⁴ dans le cas d'une section circulaire, et d'au minimum 2,08 10⁵ mm⁴ dans le cas d'une section carrée.

La figure 2 illustre également la façon dont une roue avant engage avec le profil en relief de la poutre de renfort en cas de recul de la roue suite à un choc frontal à faible recouvrement de son côté.

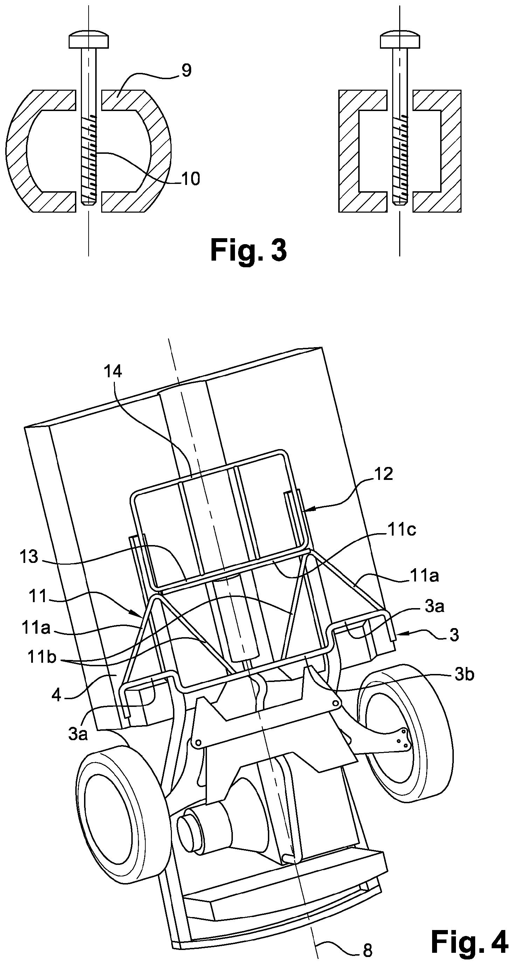

La figure 3 représente deux modes de fixation, selon que la poutre de renfort est réalisée en tube rond ou rectangulaire. Afin de permettre la fixation par vis traversante 10, des méplats 9 peuvent être réalisés au niveau des deux faces opposées de vissage dans le cas d'un tube rond (illustration de gauche de la figure 3). Les vis de fixations peuvent être directement installées sur la poutre. Alternativement ou de manière complémentaire, la poutre de renfort peut être munie de pattes de fixation additionnelles (non illustré).

La figure 4 illustre un deuxième mode de réalisation de l'invention, correspondant essentiellement au premier mode de la figure 2 où, en outre, une structure tubulaire 11 est disposée sous la structure du plancher, directement derrière la poutre de renfort transversale 3. Dans un mode de réalisation préféré de l'invention, la structure comprend deux zones de renfort (11a, 11b) disposées entre la poutre de renfort transversale 3 et une portion transversale 11c de la structure tubulaire. Ces zones de renfort sont adjacentes aux extrémités 3a profilées en U de la poutre de renfort transversale 3, de façon à constituer un appui à celles-ci en cas d'intrusion de la roue avant correspondante. Ainsi, chacune desdites zones de renfort consiste en deux poutres inclinées, l'une 11a s'étendant depuis un longeron de bas de caisse 4 du plancher vers la portion transversale 11c de la structure tubulaire, l'autre 11b depuis une zone centrale 3b de la poutre de renfort 3 vers la même portion transversale 11c de la structure tubulaire, pour rejoindre la première poutre inclinée latérale 11a.

La structure tubulaire 11 est réalisée symétrique par rapport à l'axe longitudinal principal 8 du véhicule, et est éventuellement fixée par soudage à la poutre de renfort transversale 3. La section de chacun des tubes de la structure 11 peut être circulaire ou rectangulaire. Le/les tube(s) présentent avantageusement une épaisseur de paroi supérieure à 1mm et/ou inférieure à 4mm. Le/les tube(s) présentent avantageusement un diamètre, dans le cas de tube(s) circulaire(s), ou un côté, dans le cas de tube(s) carré(s), supérieur à 25mm et/ou inférieur à 45mm.

La figure 4 illustre en outre un cadre de support 12 de batterie, notamment de traction, disposé optionnellement à l'arrière de la structure tubulaire 11. Dans un mode de réalisation préféré de l'invention, le cadre a une forme rectangulaire, dont une longueur 13 est adjacente à la portion transversale 11c de la structure tubulaire. Le cadre est par ailleurs symétrique à l'axe principal longitudinal 8 du plancher, et se subdivise en trois rectangles, de façon à ce qu'un rectangle central 14 entoure la batterie du véhicule électrique équipé d'un tel dispositif.

## Revendications

1. Véhicule automobile (1) comprenant une structure de plancher, et un essieu de deux roues (2) avant, **caractérisé en ce qu'**il comprend, en outre, une poutre de renfort (3) s'étendant transversalement sous la structure de plancher, à l'arrière de l'essieu (2), de manière à limiter un déplacement vers l'arrière d'une des roues avant en cas de choc frontal à recouvrement latéral partiel du côté de ladite roue.

2. Véhicule automobile selon la revendication 1 **caractérisé en ce que** la poutre de renfort (3) s'étend sur plus de 80% de la largeur de la structure de plancher.

3. Véhicule automobile selon l'une des revendications 1 et 2, **caractérisé en ce que** la poutre de renfort (3) comprend deux extrémités (3a) opposées disposées derrière les deux roues avant, respectivement, et comprenant, chacune, un profil en relief apte à engager avec la roue correspondante lors du déplacement vers l'arrière de ladite.

4. Véhicule automobile selon la revendication 3, **caractérisé en ce que** le profil en relief de chaque extrémité (3a) de la poutre de renfort (3) est en forme de U avec une ouverture dirigée vers la roue correspondante.

5. Véhicule automobile selon l'une des revendications 1 à 4, **caractérisé en ce que** la poutre de renfort (3) est constituée d'un profilé métallique, préférentiellement de section fermée.

6. Véhicule automobile selon l'une des revendications 1 à 5, **caractérisé en ce que** la structure de plancher comprend deux longerons de bas de caisse (4) le long des deux bords latéraux du plancher, respectivement, et deux poutres longitudinales (5) sous le plancher entre lesdits longerons de bas de caisse, la poutre de renfort étant fixée directement à chacun desdits longerons de bas de caisse et poutres longitudinales.

7. Véhicule automobile selon l'une des revendications 1 à 6, **caractérisé en ce que** la structure de plancher comprend un tunnel central (7) et deux profilés longitudinaux intérieurs (6) de part et d'autre dudit tunnel, la poutre de renfort (3) étant fixée directement à chacun desdits profilés (6).

8. Véhicule automobile selon l'une des revendications 1 à 7, **caractérisé en ce que** ledit véhicule comprend, en outre, une structure tubulaire (11) disposée sous la structure de plancher directement à l'arrière de la poutre de renfort (3) et configurée pour rigidifier ladite poutre en flexion.

9. Véhicule automobile selon la revendication 8, **caractérisé en ce que** la structure tubulaire comprend au moins deux portions de tube (11a) s'étendant vers l'arrière et de manière inclinée depuis deux extrémités (3a) opposées de ladite poutre, disposées derrière les deux roues avant, respectivement, jusqu'à une portion de tube (11c) s'étendant généralement transversalement.

10. Véhicule automobile selon l'une des revendications 8 et 9, **caractérisé en ce que** la structure tubulaire (11) est adjacente et à l'avant d'un cadre (12) supportant des batteries sous le plancher.

## Patentansprüche

1. Kraftfahrzeug (1), umfassend eine Bodenstruktur und eine Achse mit zwei Vorderrädern (2), **dadurch gekennzeichnet, dass** es weiter einen Verstrebungsbalken (3) umfasst, der sich quer unter der Bodenstruktur hinter der Achse (2) erstreckt, sodass eine Verschiebung nach hinten von einem der Vorderräder im Fall eines Frontalaufpralls mit teilweiser seitlicher Überlappung auf Seite des Rads begrenzt wird.

2. Kraftfahrzeug nach Anspruch 1, **dadurch gekennzeichnet, dass** sich der Verstrebungsbalken (3) über mehr als 80 % der Breite der Bodenstruktur erstreckt.

3. Kraftfahrzeug nach einem der Ansprüche 1 und 2, **dadurch gekennzeichnet, dass** der Verstrebungsbalken (3) zwei gegenüberliegende Enden (3a) umfasst, die jeweils hinter den zwei Vorderrädern angeordnet sind und die jeweils ein vorstehendes Profil umfassen, das geeignet ist, in das entsprechende Rad bei der Verschiebung nach hinten von diesem einzugreifen.

4. Kraftfahrzeug nach Anspruch 3, **dadurch gekennzeichnet, dass** das vorstehende Profil jedes Endes (3a) des Verstrebungsbalkens (3) eine U-Form mit einer Öffnung aufweist, die zum entsprechenden Rad gerichtet ist.

5. Kraftfahrzeug nach einem der Ansprüche 1 bis 4, **dadurch gekennzeichnet, dass** der Verstrebungsbalken (3) aus einem Metallprofil, vorzugsweise mit geschlossenem Querschnitt, besteht.

6. Kraftfahrzeug nach einem der Ansprüche 1 bis 5, **dadurch gekennzeichnet, dass** die Bodenstruktur zwei Unterholm-Längsträger (4) jeweils entlang der zwei Seitenränder des Bodens und zwei Längsbalken (5) unter dem Boden zwischen den Unterholm-Längsträgern umfasst, wobei der Verstrebungsbalken direkt an jedem der Unterholm-Längsträger und Längsbalken befestigt ist.

7. Kraftfahrzeug nach einem der Ansprüche 1 bis 6, **dadurch gekennzeichnet, dass** die Bodenstruktur einen Mitteltunnel (7) und zwei innere Längsprofile (6) auf jeder Seite des Tunnels umfasst, wobei der Verstrebungsbalken (3) direkt an jedem der Profile (6) befestigt ist.

8. Kraftfahrzeug nach einem der Ansprüche 1 bis 7, **dadurch gekennzeichnet, dass** das Fahrzeug weiter eine Rohrstruktur (11) umfasst, die unter der Bodenstruktur direkt hinter dem Verstrebungsbalken (3) angeordnet und zur Biegeversteifung des Balkens ausgestaltet ist.

9. Kraftfahrzeug nach Anspruch 8, **dadurch gekennzeichnet, dass** die Rohrstruktur mindestens zwei Rohrabschnitte (11a) umfasst, die sich nach hinten und in schräger Art ausgehend von zwei gegenüberliegenden Enden (3a) des Balkens, die jeweils hinter den zwei Vorderrädern angeordnet sind, bis zu einem Rohrabschnitt (11c) erstrecken, der sich im Allgemeinen quer erstreckt.

10. Kraftfahrzeug nach einem der Ansprüche 8 und 9, **dadurch gekennzeichnet, dass** die Rohrstruktur (11) benachbart und vor einem Rahmen (12) liegt, der Batterien unter dem Boden trägt.

## Claims

1. Motor vehicle (1) comprising a floor structure, and an axle for two front wheels (2), **characterised in that** it further comprises, a reinforcing beam (3) extending transversally under the floor structure, behind the axle (2), so as to limit a movement to the rear of one of the front wheels in case of front impact with a partial side coverage of the side of said wheel.

2. Motor vehicle according to claim 1, **characterised in that** the reinforcing beam (3) extends over more than 80% of the width of the floor structure.

3. Motor vehicle according to one of claims 1 and 2, **characterised in that** the reinforcing beam (3) comprises two opposite ends (3a) arranged behind the two front wheels, respectively, and each comprising, a relief profile capable of engaging with the corresponding wheel during the movement to the rear of said wheel.

4. Motor vehicle according to claim 3, **characterised in that** the relief profile of each end (3a) of the reinforcing beam (3) is U-shaped with an opening directed towards the corresponding wheel.

5. Motor vehicle according to one of claims 1 to 4, **characterised in that** the reinforcing beam (3) is constituted of a metal profile, preferably with a closed cross-section.

6. Motor vehicle according to one of claims 1 to 5, **characterised in that** the floor structure comprises two skid plate longitudinal members (4) along the two side edges of the floor, respectively, and two longitudinal beams (5) under the floor between said skid plate longitudinal members, the reinforcing beam being fixed directly to each of said skid plate longitudinal members and longitudinal beams.

7. Motor vehicle according to one of claims 1 to 6, **characterised in that** the floor structure comprises a central tunnel (7) and two longitudinal inner profiles (6) on either side of said tunnel, the reinforcing beam (3) being fixed directly to each of said profiles (6).

8. Motor vehicle according to one of claims 1 to 7, **characterised in that** said vehicle further comprises a tubular structure (11) arranged under the floor structure directly behind the reinforcing beam (3) and configured to rigidify said bending beam.

9. Motor vehicle according to claim 8, **characterised in that** the tubular structure comprises at least two tube portions (11a) extending towards the rear and in an inclined manner from two opposite ends (3a) of said beam, arranged behind the two front wheels, respectively, up to a tube portion (11c) extending generally transversally.

10. Motor vehicle according to one of claims 8 and 9, **characterised in that** the tubular structure (11) is adjacent and to the front of a frame (12) supporting batteries under the floor.
